# EUROPEAN PATENT SPECIFICATION

(11) **EP 3 472 697 B1**
(45) Date of publication and mention of the grant of the patent: **03.08.2022**
(21) Application number: 17813903.6
(22) Date of filing: 13.06.2017
(51) Int. Cl.: G06F 9/00, H04L 12/54, H04L 41/0853, H04L 45/12, H04L 67/63

(54) **DYNAMIC ACCELERATION IN CONTENT DELIVERY NETWORK**
DYNAMISCHE BESCHLEUNIGUNG IN EINEM INHALTSAUSGABENETZWERK
ACCÉLÉRATION DYNAMIQUE DANS UN RÉSEAU DE DISTRIBUTION DE CONTENU

(30) Priority: 15.06.2016 CN 201610424650
(43) Date of publication of application: 24.04.2019
(73) Proprietor: Alibaba Group Holding Limited, Grand Cayman (KY)
(72) Inventor: YUAN, Yansu, Hangzhou 311121 (CN)
(74) Representative: Barker Brettell LLP
(86) International application number: PCT/US2017/037155
(87) International publication number: WO 2017/218473

(56) References cited:
- US-A1- 2001 037 409
- US-A1- 2001 037 409
- US-A1- 2005 188 073
- US-A1- 2014 164 584
- US-A1- 2015 180 995
- US-A1- 2015 180 995
- US-A1- 2015 237 159

## Description

### TECHNICAL FIELD

The present disclosure relates to the field of content delivery networks, and more particularly, to a method and device for dynamic acceleration in a content delivery network.

### BACKGROUND

CDN (Content Delivery Network) technology is used to avoid bottlenecks and links that may affect data transmission speed and stability on the Internet and to make data transmission faster and more stable. CDN systems may place node servers on the Internet to form an intelligent virtual network layer on the top of the current network. The CDN systems may timely redirect user requests to a service node, which is closest to the user based on comprehensive information. The comprehensive information may include network traffic, links of nodes, load conditions, distances between the nodes and the user, response times, etc. This allows a user to get the requested content conveniently, solves network congestion, and improves the response speed of accessing to a certain site.

Most CDN service providers increase their speed with respect to static files via building their nodes and/or adopting caching techniques. However, the dynamic files need to be updated timely. Every time, a user may desire to access different contents, if edge CDN nodes do not store the desired contents, the request may be returned if reaching the edge CDN nodes. Thus, CDN caching techniques may not be able to solve in the problem in scenarios of dynamic acceleration. Return-to-source associated with CDN techniques refers to, when a user access certain content and the CDN node accessed by the user does not cache the content or the buffered content is expired, the request will be sent back to the source station. Accordingly, the content will be obtained from the source station, which stores the content.

In the conventional techniques, several CDN service providers may adopt TCP/IP protocol stack optimization and dynamic compression techniques to accelerate the network speed and to meet the needs of acceleration of dynamic files. For example, an approach for dynamic acceleration in CDN scheme is provided as follow.

People may use self-built CDN nodes, via TCP (Transmission Control Protocol)/HTTP (HyperText Transfer Protocol) among CDN nodes and domains, to perform route exploration and to calculate the optimal return-to-source routing path by adding exploration values. The user may access the domain in dynamic acceleration via terminals and access CDN nodes nearby. The CDN node calculates the optimal return-to-source routing path by route exploration.

However, these conventional techniques have problems:
(1) It is a single type of approach, which cannot be applied to different scenarios;
(2) As the number of the domain in dynamic acceleration increases, computation increases linearly, and processing performance decreases; and
(3) Little fluctuation of detection value likely affects the results, and potential optimal return-to-source paths are not stable.

US 2001/0037409 A1 relates to on-demand overlay routing for computer-based communication networks.

US 2015/0180995 A1 relates to end-to-end acceleration of dynamic content in a content delivery network.

### SUMMARY

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter.

The scope of invention is defined by the appended claims. Further embodiments of the invention are defined by the dependent claims. The embodiments which do not fall within the scope of the appended set of claims are to be interpreted as example embodiments or background information, useful only for understanding the invention.

Example embodiments of the present disclosure relate to methods of dynamic acceleration in a content delivery network and devices thereof to achieve adjustment of selection orders of optimal return-to-source paths in various scenarios.

This application example embodiment employs the following technical scheme.

In a first aspect of the disclosure a method is provided, the method comprising: receiving, by a Content Delivery Network (CDN) node, configuration information from a global control center; determining a type of the CDN node from multiple types of CDN nodes based on the configuration information, wherein the multiple types of CDN nodes include a relay node and an access node; conducting, by the CDN node, route exploration between the CDN node and one or more other CDN nodes based on the type of the CDN node to obtain one or more respective exploration values; and in response to a determination that the CDN node receives an access request from a user to a domain desired for dynamic acceleration, determining, for each of multiple return-to-source routing paths of the CDN node, a respective path value of the respective return-to-source routing path; and selecting one of the return-to-source routing paths based on the path values to perform a return-to-source operation to obtain content from a source station of the domain; wherein the determining the respective path value a respective one of the return-to-source routing paths includes: multiplying a respective exploration value between an access node and a relay node by a first weight; multiplying a respective exploration value between two adjacent relay nodes by a second weight; and multiplying a respective exploration value between a source station and a relay node by a third weight; and adding corresponding values together to obtain the respective path value of the respective one of the return-to-source routing paths.

In a second aspect of the disclosure a device in a Content Delivery Network (CDN) node is provided, the device comprising: a receiving module configured to receive configuration information from a global control center; a judgement module configured to determine a type of the CDN node from multiple types of CDN nodes based on the configuration information, wherein the multiple types of CDN nodes include a relay node and an access node; a detection module configured to perform route exploration between the CDN node and one or more other CDN nodes based on the type of the CDN node to obtain one or more respective exploration values; and a return-to-source module configured to, after receiving an access request from a user to a domain desired dynamic acceleration: determine, for each of multiple return-to-source routing paths of the CDN node, a respective path value of the respective return-to-source routing path, and select one of the return-to-source routing paths based on the path values to perform a return-to-source operation to obtain content from a source station of the domain; wherein the determining the respective path value of a respective one of the return-to-source routing paths includes: multiplying a respective exploration value between an access node and a relay node by a first weight; multiplying a respective exploration value between two adjacent relay nodes by a second weight; and multiplying a respective exploration value between a source station and a relay node by a third weight; and adding corresponding values together to obtain the respective path value of the respective one of the return-to-source routing paths.

In a third aspect of the disclosure, one or more memories stored thereon computer readable instructions are provided, wherein, when executed by one or more processors, cause the one or more processors to perform acts comprising: receiving, by a Content Delivery Network (CDN) node, configuration information from a global control center; determining a type of the CDN node from multiple types of CDN nodes based on the configuration information, wherein the multiple types of CDN nodes include a relay node and an access node; conducting, by the CDN node, route exploration between the CDN node and one or more other CDN nodes based on the type of the CDN node to obtain one or more respective exploration values; in response to a determination that the CDN node receives an access request from a user to a domain desired for dynamic acceleration, determining, for each of multiple return-to-source routing paths of the CDN node, a respective path value of the respective return-to-source routing path; and selecting one of the return-to-source routing paths based on the path values to perform a return-to-source operation to obtain content from a source station of the domain; wherein the determining the respective path value of a respective one of the return-to-source routing paths includes: multiplying a respective exploration value between an access node and a relay node by a first weight; multiplying a respective exploration value between two adjacent relay nodes by a second weight; and multiplying a respective exploration value between a source station and a relay node by a third weight; and adding corresponding values together to obtain the respective path value of the respective one of the return-to-source routing paths.

The present disclosure has at least the following advantages.

Since the introduction of the weight values, path values may be changed based on various weights, and the selection order of optimal return-to-source path may be changed to perform different tasks.

CDN nodes are categorized based on their types, and different types of CDN nodes may be used to process different tasks in different scenarios. In certain example embodiments, when a node is a relay node and an access node, the exploration value of the node is set as zero. Such process is more reasonable. Weights are divided into a first weight for the exploration value between a relay node and an access node, the second weight for exploration value between two relay nodes, and a third weight for exploration value between a relay node and a source station. For different scenarios, weights may be increased or decreased to adjust obtained optimal return-to-source paths. In addition, weights may also be set based on an identifier of a processing model in the configuration information. For the same processing model, calculation results are the same. Therefore, even more domains are required for dynamic acceleration, the number of processing models is limited, and an amount of calculation would not increase. A stable performance is maintained. In some implementations, the return-to-source routing path may be changed when the minimal path value of a return-to-source routing path is significantly different from the path value of the return-to-source path currently used. These techniques improve the stability of the return-to-source routing path and avoid jumping in response to the fluctuation of exploration values.

In implementations, it is not necessary that a product of the present disclosure may include all the advantages described above.

### BRIEF DESCRIPTION OF THE DRAWINGS

FIG.1 is a schematic flow diagram illustrating an example dynamic acceleration method in a CDN in a first example embodiment.
FIG. 2 is a schematic diagram illustrating an exploration logic of two types of CDN nodes in an implementation of the first example embodiment.
FIG. 3 is a schematic diagram illustrating transmitting of configuration information in an implementation of the first example embodiment.
FIG. 4 is a schematic diagram illustrating implementations of a first example scenario in an implementation of the first example embodiment.
FIG. 5 is a schematic diagram illustrating implementations of a second example scenario in an implementation of the first example embodiment.
FIG. 6 is a schematic diagram illustrating a device for dynamic acceleration in a CDN in a second example embodiment.

### DETAILED DESCRIPTION

Below in conjunction with the accompanying drawings, various implementations of the present disclosure are described in detail.

It should be noted that, if there is no conflict, implementations and the features thereof may be combined in various ways and are included in the scope of the present disclosure. In addition, although flow charts are shown in logical orders, in certain example embodiments, operations may be performed in other orders.

In a typical configuration, a CDN node may include one or more processors (CPU), input / output interfaces, network interfaces, and memory. The memory may include computer-readable medium volatile memory, random access memory (RAM) and / or nonvolatile memory, etc., such as read only memory (ROM) or flash memory (flash RAM). Computer-readable memory medium is an example. Memory may store thereon a module 1, a module 2, ...... , a module M (M is an integer greater than 2).

Computer-readable media includes permanent and non-permanent, removable and non-removable media that may be used in any method or technology to achieve information storage. Information can be computer-readable instructions, data structures, program modules or other data. Examples of computer storage media include, but not limited to, phase-change memory (PRAM), static random access memory (SRAM), dynamic random access memory (DRAM), other types of random-access memory (RAM), read-only memory (ROM), electrically erasable programmable Read Only memory (EEPROM), flash memory or other memory technology, CD-ROM read-only memory (CD-ROM), digital versatile disc (DVD) or other optical storage, magnetic cassettes, magnetic disk storage or other magnetic tape storage devices, or any other magnetic non-transmission medium, which can be used to store the information for access by computing devices. Defined in accordance with this present disclosure, computer-readable media does not include non-transitory media, such as modulated data signal and carriers.

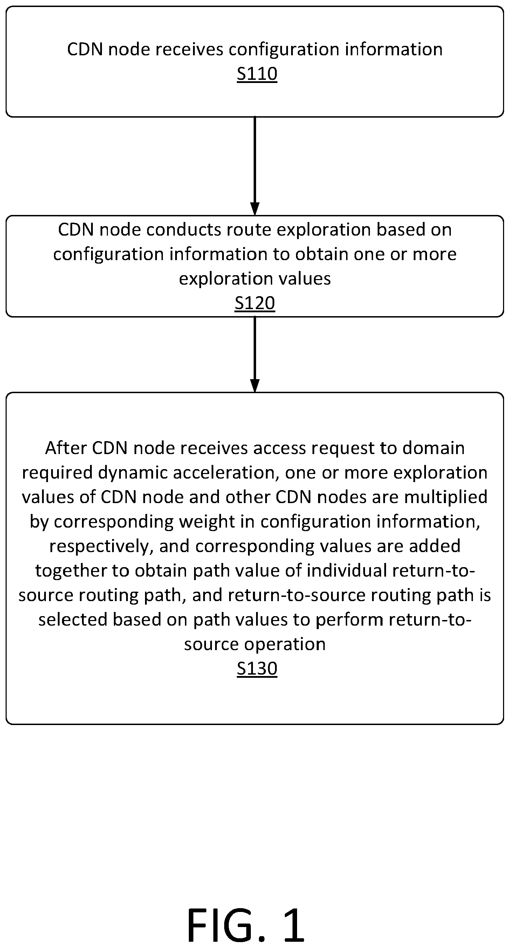

A first example embodiment relates to a method of dynamic acceleration in a CDN. As shown in FIG. 1, operations are described in detail in S110 - S130.

At S110, a CDN node receives configuration information.

At S120, the CDN node conducts route exploration based on the configuration information to obtain one or more exploration values.

At S130, after the CDN node receives an access request to a domain required dynamic acceleration, the exploration values of the CDN node and other CDN nodes are multiplied by a corresponding weight in the configuration information, respectively. Further, corresponding values are added together to obtain a path value of an individual return-to-source routing path, and a return-to-source routing path is selected based on path values to perform a return-to-source operation.

In this example embodiment, since the introduction of the weight values, path values may be changed based on various weights, and the selection order of optimal return-to-source path may be changed to perform different tasks.

In this example embodiment, CDN nodes may interact with each other nodes after obtaining exploration values. For example, a CDN node may obtain exploration values from other CDN nodes that perform route exploration.

The CDN node receives the configuration information for determining a type of the CDN node based on the configuration information. The type includes a relay node and an access node. The CDN node then conducts route exploration based on the configuration information to obtain the exploration value. If the CDN node is a relay node, the CDN node may perform the route exploration on other relay nodes and source station based on the configuration information to obtain the exploration value. If the node is an access node, the CDN node may perform the route exploration on other relay nodes based on the configuration information to obtain the exploration value.

CDN nodes are categorized based on their types, and different types of CDN nodes may be used to process different tasks in different scenarios. For example, the capacity of a server of the source station may be limited such as to receive a small amount of return-to-source exploration information. Separation of access nodes and relay nodes may avoid a situation that an access node performs route exploration on the source station directly.

In example embodiments, the exploration value obtained based on the route exploration on the relay node using the CDN node as the access node is set to zero if the type of the CDN node includes a relay node and an access node.

In implementations, the exploration value may be set to other values or an actual value that is detected.

Weight values include a first weight value, a second weight value, third weight value. Based on exploration values detected by the node and other CDN nodes and weight values in the configuration information, a path value corresponding to each return-to-source routing path may be calculated by the following operations.

Return-to-source routing paths of the CDN node may be determined. For each return-to-source routing path, the exploration value between the access node and the relay node is multiplied by the first weight value, the exploration value between two adjacent relay nodes is multiplied by the second weight value, and the exploration value between the source station and the relay node is multiplied by the third weight value. Further, corresponding values are added together to obtain the path value of the return-to-source routing path.

For example, a return-to-source routing path is provided as follow. The return-to-source routing path includes a path from an access node to the first relay node, to the second relay node, and to the source station. Suppose that the exploration value detected by the route exploration between the access node and the first relay node is rₐ, the exploration value detected by the route exploration between the first relay node and the second relay node is r_{b}, the exploration value detected by the route exploration between the second relay node and the source station is r_{c}, and the path value of the return-to-source routing path may be represented as rₐ × first weight value + r_{b} × second weight value + r_{c} × third weight value.

In implementations, the configuration information further may include an identifier of a selected processing model and information of the processing model. The information of processing models may include the identifier, the first weight value, the second weight value, and the third weight value.

In these instances, for any domain required for dynamic acceleration, the access node may obtain a weight value based on the selected processing model. For domains having the same processing model and the source station, return-to-source routing paths are the same. These techniques avoid repeated computation and increase of computation with linear growth in response to the increase of domains.

In implementations, the configuration information may include weight values and not include the concept of a processing model.

In example embodiments, the configuration information further may include the domain required for the dynamic acceleration, an identifier an access node pool performing the dynamic acceleration, and information of the access node pool. The information of the access node pool may include the identifier of the access node pool and an access node list, an identifier of a relay node pool performing the dynamic acceleration, information of the relay node pool, and an identifier of a source station. The information of the relay node pool may include an identifier of the relay node pool and the relay node list.

The type of the CDN node based on the configuration information may be determined by determining the corresponding access node pool based on the identifier of the access node pool in the dynamic acceleration and determining whether the node is in the access node list in the information of the access node pool. If the access node is within the access node list, the CDN may determine that the type of the node is an access node, determine the relay node pool corresponding to the identifier of the relay node pool in the dynamic acceleration, and determine whether the node is in the access node list in the information of the relay node pool. If the access node is within the access node list, the type of the node may be determined to be a relay node.

If the type is the access node, the CDN may further determine whether the type of the node may include the relay node based on a value of a corresponding string in the domain of the dynamic acceleration.

In these instances, the CDN node as an access node pool is not in the access node pool in the dynamic acceleration. When a value of a corresponding string in the domain desired for the dynamic acceleration is represented by a value indicating reuse of the type, the CDN node as the access node may be considered as a relay node with respect to the domain.

In these instances, various relay nodes and access nodes may be configured with respect to various domains.

In implementations, the relationship between the identifier and the type of each node may be included in the configuration information such that each CDN node may acquire the type of the node based on the relationship.

In implementations, the domain required for the dynamic acceleration may be stored in each CDN node in advance while not be acquired using the configuration information.

In these instances, the route exploration on the other relay nodes and source station may be performed by determining the relay node pool corresponding to the identifier of the relay node pool in the dynamic acceleration, determining each relay node performing the route exploration on each determined relay node except for the node based on the relay node list in the information of the relay node pool, and performing the route exploration on each source station based on an identifier of the each source station.

The route exploration on the other relay nodes may be performed by determining the relay node pool corresponding to the identifier of the relay node pool in the dynamic acceleration and determining each relay node performing the route exploration on each determined relay node based on the relay node list in the information of the relay node pool.

In implementations, information of relay nodes may be obtained such as to perform route exploration based on the interaction between CDN nodes. For example, after each CDN node determines the type of the node, the CDN node may notify other CDN nodes.

In implementations, the identifier of the source station may be stored in the CDN node if the source station relatively fixed, while not being acquired using the configuration information.

In implementations, the return-to-source routing path based on path values to perform the return-to-source operation may be selected by performing the following operations. If there is not a return-to-source routing path available, the return-to-source routing path having the smallest path value for the return-to-source operation may be selected. If there is a return-to-source routing path available, the CDN node may determine whether the return-to-source routing path having the smallest path value is the return-to-source routing path that is currently used. If the return-to-source routing path having the smallest path value is the return-to-source routing path that is currently used, the CDN node may perform the return-to-source operation using the return-to-source routing path that is currently used. If the return-to-source routing path having the smallest path value is the return-to-source routing path that is currently used, the CDN node may determine a difference between two return-to-source routing paths is within a predetermined threshold. If the difference is within the predetermined threshold, the CDN node may perform the return-to-source operation using the return-to-source routing path that is currently used. If the difference is not within the predetermined threshold, the CDN node may perform the return-to-source operation using the return-to-source routing path having the smallest path value.

In implementations, the return-to-source routing path may be changed when the minimal path value of a return-to-source routing path is significantly different from the path value of the return-to-source path currently used. These techniques improve the stability of the return-to-source routing path and avoid jumping in response to the fluctuation of exploration values.

In implementations, the predetermined range may be configured based on experience or tests.

In implementations, a return-to-source routing path having the smallest path value may be selected for the return-to-source operation. By increasing the length of detection periods, path switching frequency is therefore reduced, and path stability may be improved as well. In addition, exploration values may be performed by a rounding process such that slight fluctuation may not have a large impact on path values, and stability of path may be improved accordingly.

The following example illustrates exemplary example embodiments described above.

CDN nodes include two types: relay nodes and access nodes. Each CDN node may be used as one or more types of nodes.

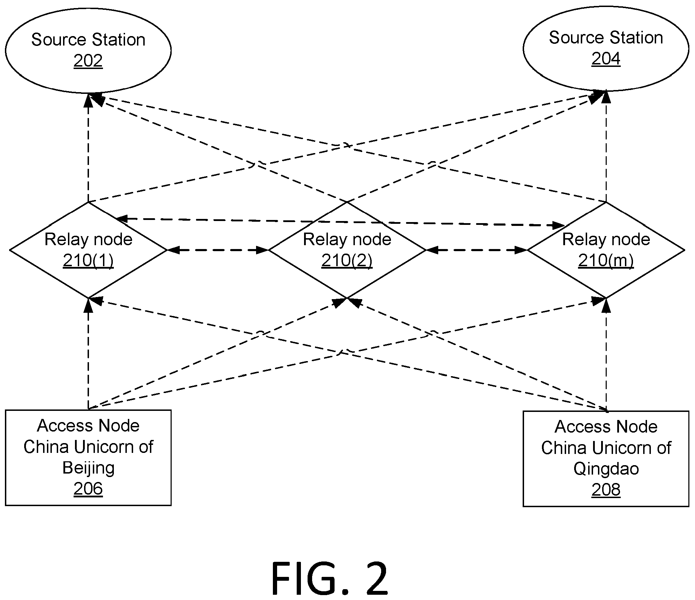

An access node generally refers to an edge CDN node, which is close to users (location + carriers), and each access node may detect each relay node respectively. A relay node may function as a transit route, and detection may be performed among relay nodes and between each relay node and the user source station. FIG. 2 illustrates a detection logic of two types of CDN nodes. In FIG. 2, dashed line represents detection routes between nodes. Suppose that there are source station 202 and source station 204. Access node 206 is a node in China Unicorn of Beijing, and another access node 208 is a node in China Unicorn of Qingdao. Accordingly, each relay node, such as relay node 210(1), 210(2), ..., 210(m), m being any integer, detects two source stations respectively, and relay nodes may detect each other. Each access node may detect each relay node.

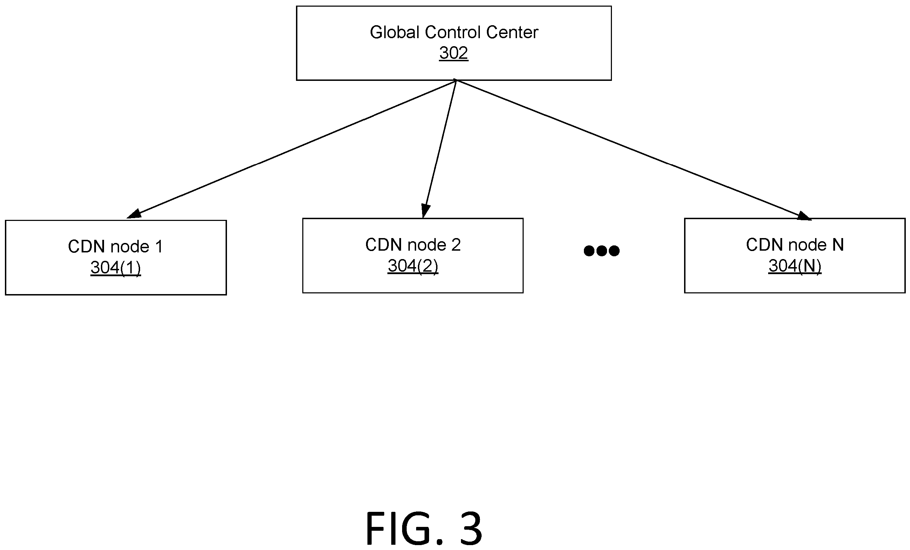

In these instances, configuration information such as dynamic acceleration domains and processing models may be configured at a global control center. Changes of configuration information may be distributed in real-time or periodically to each CDN node, and any policy may be taken effective within a detection decision cycle. FIG. 3 illustrates a global control center 302, which distributes configuration information to various CDN nodes such as CDN node 1 304(1), CDN node2 304(2), ..., CDN node N 304(N), N may be any integer.

In these instances, the configuration information may include: (1) information of domains required for dynamic acceleration, which may include a domain required for dynamic acceleration, an identifier of an access node pool in dynamic acceleration, an identifier of a relay node pool in dynamic acceleration, an identifier of a source station, and an identifier of the selected processing model, (2) information on access node pools, which may include an identifier of each access node pool, and access node list, (3) information of relay node pools, which may include an identifier of each relay node pool and replay node list, (4) information of domain source stations, which may include an identifier of each source station and a virtual IP or a domain supporting the configuration, (5) information of processing models, which may include an identifier of each processing model, descriptions, weight values (including weights for access nodes to relay nodes, weights for relay nodes to relay nodes, and weights for relay nodes to source stations).

In these instances, a CDN node may perform the following operations. After receiving configuration information, the CDN node may determine the corresponding access node pool based on the identifier of the access node pool in the dynamic acceleration and determine whether the node is in the access node list in the information of the access node pool. If the node is within the access node list in the information of the access node pool, the CDN may determine that the type of the node is an access node. Each CDN node may determine whether the type of the node may include the relay node based on a value of a corresponding string in the domain of the dynamic acceleration. For example, the predefined string value is "enable" in the domain, the CDN node is a relay node when the type of the CDN node is an access node. If the predefined string value is not "enable," the CDN node merely is an access node when the type of the CDN node is an access node.

For various domains required for the dynamic acceleration, CDN node sets including access nodes may be different, and types of a CDN node may be different. For example, domain X includes CDN node R, and the type of the CDN R is an access node. Domain Y includes CDN node R, and the types of the CDN node is both an access node and a relay node. For domain Z, CDN node R is neither an access node nor a relay node. Here, domains X, Y, and Z are domains required for dynamic acceleration.

If the type of the CDN node includes an access node, a domain request may be processed. If the type of the CDN node includes a relay node, the source station of the domain may be detected, and the ability for return-to-source is available.

In these instances, if the type of the CDN node is a relay node and an access node, the exploration value of the node is set to zero, which the highest priority.

In these instances, the exploration value may be the round-trip delay between the detected node and the present node. For example, detection may be performed using TCP, and the exploration value is round-trip delay value of RTT. For example, detection may be performed using HTTP, and the exploration value is round-trip delay value of RT.

Common dynamic acceleration includes following scenarios.

In scene one, when a user accesses a dynamic document, the return-to-source operation may be performed via an accessible and near edge CDN node. When the return-to-source network is poor, the edge CDN node may perform the return-to-source operation via other CDN nodes and resume the previous return-to-source operation timely when the network is restored. This approach requires servers of the source station having high performance and capable of receiving detection by multiple batches of CDN nodes.

In scene two, the performance of servers of the source station is limited, and the servers are merely capable of receiving return-to-source detection from a small number of nodes in the CDN node pool. When a user accesses the accessible edge CDN node, the edge CDN node may forward return-to-source to nodes in the CDN node pool.

In other scenarios, return-to-source operations may be performed via the node, which is closest to the source station. CDN vendors may, based on their own costs and user experience, control the return-to-source routing hop-count and other parameters.

In these instances, a corresponding processing model may be provided for the scenarios described above.

Implementations of the two scenarios are provided as follow.

In scene one, return-to-source of access CDN nodes is direct and has priority. When the return-to-source network is poor, the access CDN nodes may perform return-to-source operations via other nodes.

Suppose that, in the configuration information, the id of the access node pool and the relay node pool is b (i.e., the access node and the relay node share a set of CDN node pool), and id of the selected processing model is c (thereafter processing model c).

For processing model c, the weight between an access node and a relay node is c1, the weight between a relay node and another relay node is c2, and the weight between a relay node and the source station is c3.

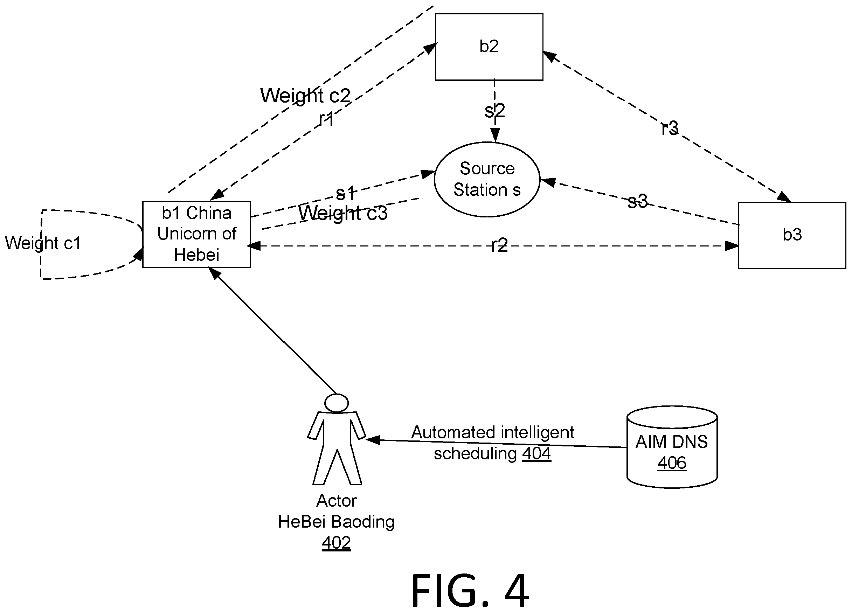

As illustrated in FIG. 4, for three CDN nodes b1, b2, and b3, each node is both an access node and a relay node. r1, r2, and r3 are detected RT/RTT values between these CDN nodes, respectively. S1, S2, and S3 are detected RT/RTT values between each node and the source station, respectively. In FIG. 4, dotted lines represent route exploration between nodes. RT/RTT values derived from self-route exploration of each node are zero, as denoted by r0.

Suppose that a user or actor 402 of China Unicom (Actor) in Baoding selectively accesses a CDN node b1 of China Unicom in Hebei. A path value corresponding each return-to-source routing path is provided as follow:
Rout1 = c1 ^{∗} r0 + c3 ^{∗} s1 (i.e., from access node b1, to relay node b1, to source station s),
Rout2 = c1 ^{∗} r0 + c2 ^{∗} r1 + c3 ^{∗} s2 (i.e., from access node b1, to relay node b1, to relay node b2, to source station s),
Rout3 = c1 ^{∗} r0 + c2 ^{∗} r2 + c3 ^{∗} s3 (i.e., from access node b1, to relay node b1, to relay node b3, to source station s),
Rout4 = c1 ^{∗} r0 + c2 ^{∗} r1 + c2 ^{∗} r3 + c3 ^{∗} s3 (i.e., from access node b1, to relay node b1, to relay node b2, to relay node b3, to source station s),
Rout5 = c1 ^{∗} r0 + c2 ^{∗} r2 + c2 ^{∗} r3 + c3 ^{∗} s2 (i.e., from access node b1, to relay node b1, to relay node b3, to relay node b2, to source station s), and
Optimal return-to-source routing path is: Min (Rout1, Rout2, Rout3, Rout4, Rout5). Min indicates the minimum value.

By changes of the processing model, different c1, c2, and c3 may be obtained. The obtained return-to-source routing path may change as well as to be applied to different scenarios.

Specific analysis is provided as follows: (1) if c1 increases, since r0 is 0, when node b1 is both an access node and a relay node, c1 configuration may not affect the result of path selection; (2) if c2 increases, Route 4 and Route 5 may be preferentially eliminated to reduce routing hop-count and to reduce transmission costs between CDN nodes; (2) if c3 increases, return-to-source operations may be performed via the CDN node, which is closest to the source station.

In scene two, the performance of servers of the source station is limited, and the server may receive a small amount of return-to-source exploration information.

Suppose that, in the configuration information, the id of an access node in the dynamic acceleration is a, the id of a relay node in the dynamic acceleration is b, and id of the selected processing model is c (thereafter processing model c). The relay node pool is a relatively small CDN node set, and the amount of detection of the source station is reduced.

For processing model c, the weight between an access node and a relay node is c1, the weight between a relay node and another relay node is c2, and the weight between a relay node and the source station is c3.

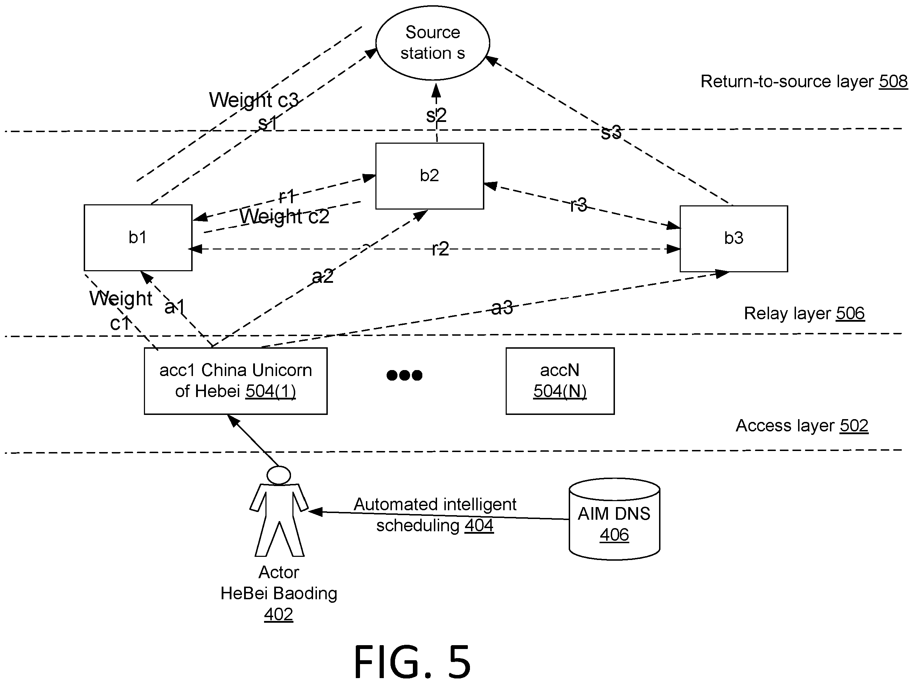

As illustrated in FIG. 5, an access layer 502 includes access nodes acc1 504(1) ~ accN 504(N), a relay layer 506 includes three relay nodes b1, b2, and b3, and a return-to-source layer 508 includes source station s.

As used here, a1, a2, and a3 are detected RT/RTT values between each node and the source station, respectively, r1, r2, and r3 are detected RT/RTT values between these relay nodes, respectively, and S1, S2, and S3 are detected RT/RTT values between each relay node and the source station, respectively. In FIG. 5, dotted lines represent route exploration between nodes.

Under this scenario, an access node may perform return-to-source via at least a relay node, and there is at least one hop route between CDN nodes under this approach.

Suppose that the user of China Unicom (Actor) in Baoding 402 selectively accesses an access node acc1 504(1) of China Unicom in Hebei via automated intelligent scheduling 404 of AIM DNS 406. Suppose that the acc1 502 performs return-to-source via relay node b1. A path value corresponding each return-to-source routing path is provided as follow:
Rout1 = c1 ^{∗} a1 + c3 ^{∗} s1 (i.e., from access node acc1, to relay node b1, to source station s),
Rout2 = c1 ^{∗} a1 + c2 ^{∗} r1 + c3 ^{∗} s2 (i.e., from access node acc1, to relay node b1, to relay node b2, to source station s),
Rout3 = c1 ^{∗} a1 + c2 ^{∗} r2 + c3 ^{∗} s3 (i.e., from access node acc1, to relay node b1, to relay node b3, to source station s),
Rout4 = c1 ^{∗} a1 + c2 ^{∗} r1 + c2 ^{∗} r3 + c3 ^{∗} s3 (i.e., from access node acc1, to relay node b1, to relay node b2, to relay node b3, to source station s),
Rout5 = c1 ^{∗} a1 + c2 ^{∗} r2 + c2 ^{∗} r3 + c3 ^{∗} s2 (i.e., from access node acc1, to relay node b1, to relay node b3, to relay node b2, to source station s), and
Optimal return-to-source routing path is: Min (Rout1, Rout2, Rout3, Rout4, Rout5).

By changes of the processing model, different c1, c2, and c3 may be obtained. The obtained return-to-source routing path may change as well as to be applied to different scenarios.

Specific analysis is provided as follows: (1) if c1 increases, return-to-source may be performed via the node, which is closest to the source station, (2) if c2 increases, Route 4 and Route 5 may be preferentially eliminated to reduce routing hop-count and to reduce transmission costs between CDN nodes, (3) if c3 increases, return-to-source operations may be performed via the CDN node, which is closest to the source station.

In the two scenarios as described above, if there is a return-to-source routing path available, the CDN node may determine whether the optimal return-to-source routing path is the return-to-source routing path that is currently used. If the return-to-source routing path having the smallest path value is the return-to-source routing path that is currently used, the CDN node may perform the return-to-source operation using the return-to-source routing path that is currently used. If the return-to-source routing path having the smallest path value is the return-to-source routing path that is currently used, the CDN node may determine a difference between two return-to-source routing paths is within a predetermined threshold. If the difference is within the predetermined threshold, the CDN node may perform the return-to-source operation using the return-to-source routing path that is currently used. If the difference is not within the predetermined threshold, the CDN node may perform the return-to-source operation using the optimal return-to-source routing path. Suppose that the path value of the current return-to-source routing path is 7 and the predetermined range is assumed to be less than or equal to 2. If the path value of the optimal return-to-source routing path is 6 or 5, and the difference between two path values is less than 1 or 2, the current return-to-source routing path may not be changed. However, if the path value of the optimal return-to-source routing path is 4 or less, and the difference between two path values is more than 3, the current return-to-source routing path may be changed to the optimal routing path.

A second example embodiment of the present disclosure describes a device for dynamic acceleration in CDN.

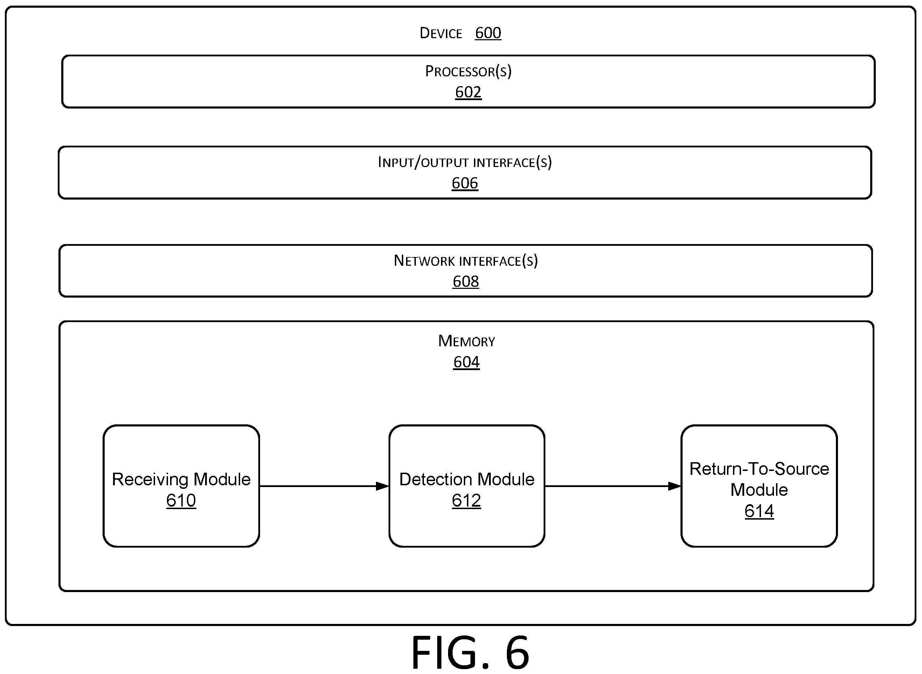

As illustrated in FIG. 6, a device 600 may include one or more processor(s) 602 or data processing unit(s) and memory 604. The device 600 may further include one or more input/output interface(s) 606, and network interface(s) 608. The memory 604 is an example of computer-readable media.

The memory 604 stores therein a plurality of modules or units including:
a receiving module 610 configured to receive configuration information, a detection module 612 configured to perform route exploration based on the configuration information to obtain an exploration value, and a return-to-source module 614 configured to, after receiving an access request to a domain required dynamic acceleration, multiple the exploration value of the CDN node and other CDN nodes by a corresponding weight in the configuration information, respectively, to add corresponding values together to obtain a path value of an individual return-to-source routing path, and to select a return-to-source routing path based on path values to perform a return-to-source operation.

In this example embodiment, the receiving module 610 may receive configuration information on the device and include software and/or hardware.

In this example embodiment, the detection module 612 may perform route exploration in the device and include software and/or hardware.

In this example embodiment, the return-to-source module 614 may perform return-to-source in the device and include software and/or hardware.

The device is incorporated into a CDN node. As used herein, the node refers to the device in a CDN node.

The device further includes a judgment module configured to determine the type of the node based on the configuration information. The type includes a relay node and an access node.

The route exploration based on the configuration information to obtain the obtained exploration value may be implemented by the following operations. If the CDN node is a relay node, the CDN node may perform the route exploration on other relay nodes and source station based on the configuration information to obtain an exploration value. If the node is an access node, the CDN node may perform the route exploration on other relay nodes based on the configuration information to obtain the exploration value.

In example embodiments, the exploration value obtained based on the route exploration on the relay node using the CDN node as the access node is set to zero if the detection module determines that the CDN node is a relay node and an access node.

Weight values include a first weight value, a second weight value, third weight value. The return-to-source module sets the exploration value of the CDN node and other CDN nodes to be multiplied by a corresponding weight in the configuration information, respectively, and then corresponding values are added together to obtain a path value of an individual return-to-source routing path. The return-to-source module determines return-to-source routing paths of the CDN node, for each return-to-source routing path, multiply the exploration value between the access node and the relay node by the first weight value, multiply the exploration value between two adjacent relay nodes by the second weight value, multiply the exploration value between the source station and the relay node by the third weight value, and add the corresponding values together to obtain the path value of the return-to-source routing path.

In implementations, the configuration information further may include an identifier of a selected processing model and information of the processing model. The information of processing models may include the identifier, the first weight value, the second weight value, and the third weight value.

In example embodiments, the configuration information further may include the domain required for the dynamic acceleration, an identifier an access node pool performing the dynamic acceleration, and information of the access node pool. The information of the access node pool may include the identifier of the access node pool and an access node list, an identifier of a relay node pool performing the dynamic acceleration, information of the relay node pool, and an identifier of a source station. The information of the relay node pool may include an identifier of the relay node pool and the relay node list,

The type of the CDN node based on the configuration information by the judgment module may be determined by performing the following operations. The judgment module may determine the corresponding access node pool based on the identifier of the access node pool in the dynamic acceleration and determine whether the node is in the access node list in the information of the access node pool. If the access node is within the access node list, the device may determine that the type of the node is an access node. The detection module may determine the corresponding access node pool based on the identifier of the access node pool in the dynamic acceleration and determine whether the node is in the access node list in the information of the relay node pool. If the access node is within the access node list, the device may determine that the type of the node is a relay node. If the type is the access node, the device may determine whether the type of the node may include the relay node based on a value of a corresponding string in the domain of the dynamic acceleration.

In implementations, the route exploration on the other relay nodes and source station may be performed based on the configuration information by the detection module in the following manner. The detection module may determine the corresponding access node pool based on the identifier of the access node pool in the dynamic acceleration, determine the relay node based on the relay node list in the information of the relay node pool, perform the route exploration on each determined relay node except for the node, and performing the route exploration on each source station based on an identifier of each source station.

The route exploration on other relay nodes may be performed based on the configuration information in the following manner. The device may determine the relay node pool corresponding to the identifier of the relay node pool in the dynamic acceleration, determine the relay node based on the relay node list in the information of the relay node pool, and perform the route exploration on each determined relay node.

In implementations, the return-to-source routing path may be selected based on path values to perform the return-to-source operation by the return-to-source module in the following manner. If the return-to-source module determines that there is not a return-to-source routing path available, the device may select a return-to-source routing path having the smallest path value for the return-to-source operation. If there is a return-to-source routing path available, the device may determine whether the return-to-source routing path having the smallest path value is the return-to-source routing path that is currently used. If the return-to-source routing path having the smallest path value is the return-to-source routing path that is currently used, the device may perform the return-to-source operation using the return-to-source routing path that is currently used. If the return-to-source routing path having the smallest path value is the return-to-source routing path that is currently used, the device may determine a difference between two return-to-source routing paths is within a predetermined threshold. If the difference is within the predetermined threshold, the device may perform the return-to-source operation using the return-to-source routing path that is currently used If the difference is not within the predetermined threshold, the device may perform the return-to-source operation using the return-to-source routing path having the smallest path value.

Further details can be found in the first example embodiment.

Those of ordinary skill in the art will be appreciated that all or a portion of the above-described techniques may be performed by hardware with instructions. The application software/programs (including associated data structures) may be stored in a computer-readable recording medium, such as read-only memory (ROM) or flash memory (flash RAM). In some example embodiments, all or a portion of the above-described example embodiments may be implemented using one or more integrated circuits. Correspondingly, the one or more processing modules may be implemented using modules of hardware and/or software. This application is not limited to a specific combination of hardware and software.

In implementations, other example embodiments may be included in the present disclosure, without conflict, one of ordinary skill in the art should understand that forms and details may vary without departing from the scope of the present disclosure as defined by the appended claims.

## Claims

1. A method comprising:
receiving, by a Content Delivery Network, CDN, node, configuration information from a global control center;
determining a type of the CDN node from multiple types of CDN nodes based on the configuration information, wherein the multiple types of CDN nodes include a relay node and an access node;
conducting, by the CDN node, route exploration between the CDN node and one or more other CDN nodes based on the type of the CDN node to obtain one or more respective exploration values; and
in response to a determination that the CDN node receives an access request from a user to a domain desired for dynamic acceleration,
determining, for each of multiple return-to-source routing paths of the CDN node, a respective path value of the respective return-to-source routing path; and
selecting one of the return-to-source routing paths based on the path values to perform a return-to-source operation to obtain content from a source station of the domain;
wherein the determining the respective path value a respective one of the return-to-source routing paths includes:
multiplying a respective exploration value between an access node and a relay node by a first weight;
multiplying a respective exploration value between two adjacent relay nodes by a second weight; and
multiplying a respective exploration value between a source station and a relay node by a third weight; and
adding corresponding values together to obtain the respective path value of the respective one of the return-to-source routing paths.

2. The method of claim 1, wherein the conducting, by the CDN node, the route exploration between the CDN node and one or more other CDN nodes based on the type of the CDN node to obtain the one or more respective exploration values includes:
performing the route exploration on other relay nodes and a source station based on the configuration information to obtain the respective exploration values in response to determining that the CDN node is a relay node; or
performing the route exploration on other relay nodes based on the configuration information to obtain the respective exploration values if the node is an access node.

3. The method of any preceding claim, wherein the respective exploration value obtained based on the route exploration on the relay node using the CDN node as the access node is set to zero in response to determining that the type of the CDN node includes both a relay node and an access node.

4. The method of any preceding claim, wherein the configuration information includes:
information of the domain desired for the dynamic acceleration; and
one or more respective identifiers of one or more access node pools performing the dynamic acceleration.

5. The method of claim 4, wherein information of a respective access node pool of the one or more access node pools includes:
an identifier of the respective access node pool;
an access node list;
one or more respective identifier of one or more relay node pools performing the dynamic acceleration;
information of the one or more relay node pools; and
an identifier of the source station.

6. The method of claim 5, wherein information of a respective relay node pool of the one or more relay node pools includes an identifier of the respective relay node pool and a respective relay node list.

7. The method of claim 6, wherein the receiving, by the CDN node, the configuration information includes determining a type of the CDN node based on the configuration information, the determining the type of the CDN node based on the configuration information includes:
determining a corresponding access node pool based on the respective identifier of the respective access node pool in the dynamic acceleration;
determining whether the node is within the access node list in the information of the respective access node pool; and
determining that the type of the node is an access node in response to determining that the access node is within the access node list.

8. The method of any preceding claim, wherein the selecting the return-to-source routing path based on the path values to perform the return-to-source operation includes:
in response to determining that there is not a return-to-source routing path available, selecting a return-to-source routing path having a smallest path value for the return-to-source operation.

9. The method of any one of claims 1 to 7, wherein the selecting one of the return-to-source routing paths based on the path values to perform the return-to-source operation includes:
in response to determining that there is a return-to-source routing path available, determining whether the return-to-source routing path having the smallest path value is the return-to-source routing path that is currently used,
performing a return-to-source operation using the return-to-source routing path that is currently used in response to determining that the return-to-source routing path having the smallest path value is the return-to-source routing path that is currently used; or
determining a difference between two return-to-source routing paths is within a predetermined threshold in response to determining that the return-to-source routing path having the smallest path value is not the return-to-source routing path that is currently used;
performing the return-to-source operation using the return-to-source routing path that is currently used in response to determining that the difference is within the predetermined threshold; or
performing the return-to-source operation using the return-to-source routing path having the smallest path value in resposne to determining that the difference is not within the predetermined threshold.

10. A device (600) in a Content Delivery Network, CDN, node comprising:
a receiving module (610) configured to receive configuration information from a global control center (302);
a judgement module configured to determine a type of the CDN node from multiple types of CDN nodes based on the configuration information, wherein the multiple types of CDN nodes include a relay node and an access node;
a detection module (612) configured to perform route exploration between the CDN node and one or more other CDN nodes based on the type of the CDN node to obtain one or more respective exploration values; and
a return-to-source module (614) configured to, after receiving an access request from a user to a domain desired dynamic acceleration:
determine, for each of multiple return-to-source routing paths of the CDN node, a respective path value of the respective return-to-source routing path, and
select one of the return-to-source routing paths based on the path values to perform a return-to-source operation to obtain content from a source station of the domain;
wherein the determining the respective path value of a respective one of the return-to-source routing paths includes:
multiplying a respective exploration value between an access node and a relay node by a first weight;
multiplying a respective exploration value between two adjacent relay nodes by a second weight; and
multiplying a respective exploration value between a source station and a relay node by a third weight; and
adding corresponding values together to obtain the respective path value of the respective one of the return-to-source routing paths.

11. One or more memories (604) stored thereon computer readable instructions that, when executed by one or more processors (602), cause the one or more processors to perform acts comprising:
receiving, by a Content Delivery Network, CDN, node, configuration information from a global control center;
determining a type of the CDN node from multiple types of CDN nodes based on the configuration information, wherein the multiple types of CDN nodes include a relay node and an access node;
conducting, by the CDN node, route exploration between the CDN node and one or more other CDN nodes based on the type of the CDN node to obtain one or more respective exploration values;
in response to a determination that the CDN node receives an access request from a user to a domain desired for dynamic acceleration,
determining, for each of multiple return-to-source routing paths of the CDN node, a respective path value of the respective return-to-source routing path; and
selecting one of the return-to-source routing paths based on the path values to perform a return-to-source operation to obtain content from a source station of the domain;
wherein the determining the respective path value of a respective one of the return-to-source routing paths includes:
multiplying a respective exploration value between an access node and a relay node by a first weight;
multiplying a respective exploration value between two adjacent relay nodes by a second weight; and
multiplying a respective exploration value between a source station and a relay node by a third weight; and
adding corresponding values together to obtain the respective path value of the respective one of the return-to-source routing paths.

## Patentansprüche

1. Verfahren, umfassend:
Empfangen von Konfigurationsinformationen durch einen Knoten eines Inhaltsausgabenetzwerks, CDN, von einer globalen Steuerzentrale;
Bestimmen eines Typs des CDN-Knotens aus mehreren Typen von CDN-Knoten basierend auf den Konfigurationsinformationen, wobei die mehreren Typen von CDN-Knoten einen Relaisknoten und einen Zugangsknoten umfassen;
Durchführen von Leitwegerkundung zwischen dem CDN-Knoten und einem oder mehreren anderen CDN-Knoten durch den CDN-Knoten basierend auf dem Typ des CDN-Knotens, um einen oder mehrere jeweilige Erkundungswerte zu erhalten; und
in Reaktion auf eine Bestimmung, dass der CDN-Knoten eine Zugangsanforderung von einem Benutzer zu einer für dynamische Beschleunigung gewünschten Domäne empfängt,
Bestimmen für jeden von mehreren Rückkehr-zur-Quelle-Leitwegpfaden des CDN-Knotens eines jeweiligen Pfadwerts des jeweiligen Rückkehr-zur-Quelle-Leitwegpfads; und
Auswählen eines der Rückkehr-zur-Quelle-Leitwegpfade basierend auf den Pfadwerten zum Durchführen einer Rückkehr-zur-Quelle-Operation, um Inhalt von einer Quellstation der Domäne zu erhalten;
wobei das Bestimmen des jeweiligen Pfadwerts eines jeweiligen der Rückkehr-zur-Quelle-Leitwegpfade umfasst:
Multiplizieren eines jeweiligen Erkundungswerts zwischen einem Zugangsknoten und einem Relaisknoten mit einem ersten Gewicht;
Multiplizieren eines jeweiligen Erkundungswerts zwischen zwei benachbarten Relaisknoten mit einem zweiten Gewicht; und
Multiplizieren eines jeweiligen Erkundungswerts zwischen einer Quellstation und einem Relaisknoten mit einem dritten Gewicht; und
Zusammenzählen entsprechender Werte, um den jeweiligen Pfadwert des jeweiligen der Rückkehr-zur-Quelle-Leitwegpfade zu erhalten.

2. Verfahren nach Anspruch 1, wobei das Durchführen der Leitwegerkundung zwischen dem CDN-Knoten und einem oder mehreren anderen CDN-Knoten durch den CDN-Knoten basierend auf dem Typ des CDN-Knotens zum Erhalten eines oder mehrerer jeweiliger Erkundungswerte umfasst:
Durchführen der Leitwegerkundung auf anderen Relaisknoten und einer Quellstation basierend auf den Konfigurationsinformationen, um die jeweiligen Erkundungswerte zu erhalten, in Reaktion auf ein Bestimmen, dass der CD-Knoten ein Relaisknoten ist; oder
Durchführen der Leitwegerkundung auf anderen Relaisknoten basierend auf den Konfigurationsinformationen, um die jeweiligen Erkundungswerte zu erhalten, falls der Knoten ein Zugangsknoten ist.

3. Verfahren nach einem der vorhergehenden Ansprüche, wobei der jeweilige Erkundungswert, der basierend auf der Leitwegerkundung auf dem Relaisknoten unter Verwendung des CDN-Knotens als Zugangsknoten erhalten wird, in Reaktion auf ein Bestimmen, dass der Typ des CDN-Knotens sowohl einen Relaisknoten als auch einen Zugangsknoten umfasst, auf null gesetzt wird.

4. Verfahren nach einem der vorhergehenden Ansprüche, wobei die Konfigurationsinformationen umfassen:
Informationen der für die dynamische Beschleunigung gewünschten Domäne;
eine oder mehrere jeweiliger Kennungen eines oder mehrerer Zugangsknotenpools, welche die dynamische Beschleunigung durchführen.

5. Verfahren nach Anspruch 4, wobei Informationen eines jeweiligen Zugangsknotenpools des einen oder der mehreren Zugangsknotenpools umfassen:
eine Kennung des jeweiligen Zugangsknotenpools;
eine Zugangsknotenliste;
eine oder mehrere jeweilige Kennungen eines oder mehrerer Relaisknotenpools, welche die dynamische Beschleunigung durchführen;
Informationen des einen oder der mehreren Relaisknotenpools; und
eine Kennung der Quellstation.

6. Verfahren nach Anspruch 5, wobei Informationen eines jeweiligen Relaisknotenpools des einen oder der mehreren Relaisknotenpools eine Kennung des jeweiligen Relaisknotenpools und eine jeweilige Relaisknotenliste umfassen.

7. Verfahren nach Anspruch 6, wobei das Empfangen der Konfigurationsinformationen durch den CDN-Knoten ein Bestimmen eines Typs des CDN-Knotens basierend auf den Konfigurationsinformationen umfasst, wobei das Bestimmen des Typs des CDN-Knotens basierend auf den Konfigurationsinformationen umfasst:
Bestimmen eines entsprechenden Zugangsknotenpools basierend auf der jeweiligen Kennung des jeweiligen Zugangsknotenpools bei der dynamischen Beschleunigung;
Bestimmen, ob der Knoten in der Zugangsknotenliste in den Informationen des jeweiligen Zugangsknotenpools ist;
Bestimmen, dass der Typ des Knotens ein Zugangsknoten ist, in Reaktion auf ein Bestimmen, dass der Zugangsknoten in der Zugangsknotenliste ist.

8. Verfahren nach einem der vorhergehenden Ansprüche, wobei das Auswählen des Rückkehr-zur-Quelle-Leitwegpfads basierend auf den Pfadwerten zum Durchführen der Rückkehr-zur-Quelle-Operation umfasst:
Auswählen eines Rückkehr-zur-Quelle-Leitwegpfads mit einem kleinsten Pfadwert für die Rückkehr-zur-Quelle-Operation in Reaktion auf ein Bestimmen, dass kein Rückkehr-zur-Quelle-Leitwegpfad verfügbar ist.

9. Verfahren nach einem der vorhergehenden 1 bis 7 Ansprüche, wobei das Auswählen eines der Rückkehr-zur-Quelle-Leitwegpfade basierend auf den Pfadwerten zum Durchführen der Rückkehr-zur-Quelle-Operation umfasst:
Bestimmen, ob der Rückkehr-zur-Quelle-Leitwegpfad mit dem kleinsten Pfadwert der gegenwärtig verwendete Rückkehr-zur-Quelle-Leitwegpfad ist, in Reaktion auf ein Bestimmen, dass ein Rückkehr-zur-Quelle-Leitwegpfad verfügbar ist,
Durchführen einer Rückkehr-zur-Quelle-Operation unter Verwendung des gegenwärtig verwendeten Rückkehr-zur-Quelle-Leitwegpfads in Reaktion auf ein Bestimmen, dass der Rückkehr-zur-Quelle-Leitwegpfad mit dem kleinsten Pfadwert der gegenwärtig verwendete Rückkehr-zur-Quelle-Leitwegpfad ist; oder
Bestimmen, dass eine Differenz zwischen zwei Rückkehr-zur-Quelle-Leitwegpfaden innerhalb einer vorbestimmten Schwelle liegt, in Reaktion auf ein Bestimmen, dass der Rückkehr-zur-Quelle-Leitwegpfad mit dem kleinsten Pfadwert nicht der gegenwärtig verwendete Rückkehr-zur-Quelle-Leitwegpfad ist;
Durchführen der Rückkehr-zur-Quelle-Operation unter Verwendung des gegenwärtig verwendeten Rückkehr-zur-Quelle-Leitwegpfads in Reaktion auf ein Bestimmen, dass die Differenz innerhalb der vorbestimmten Schwelle liegt; oder
Durchführen der Rückkehr-zur-Quelle-Operation unter Verwendung des Rückkehr-zur-Quelle-Leitwegpfads mit dem kleinsten Pfadwert in Reaktion auf ein Bestimmen, dass die Differenz nicht innerhalb der vorbestimmten Schwelle liegt.

10. Vorrichtung (600) in einem Knoten eines Inhaltsausgabenetzwerks, CDN, umfassend:
ein Empfangsmodul (610), das zum Empfangen von Konfigurationsinformationen von einer globalen Steuerzentrale (302) konfiguriert ist;
ein Beurteilungsmodul, das zum Bestimmen eines Typs des CDN-Knotens aus mehreren Typen von CDN-Knoten basierend auf den Konfigurationsinformationen konfiguriert ist, wobei die mehreren Typen von CDN-Knoten einen Relaisknoten und einen Zugangsknoten umfassen;
ein Detektionsmodul (612), das so konfiguriert ist, dass es Leitwegerkundung zwischen dem CDN-Knoten und einem oder mehreren anderen CDN-Knoten basierend auf dem Typ des CDN-Knotens durchführt, um einen oder mehrere jeweilige Erkundungswerte zu erhalten; und
ein Rückkehr-zur-Quelle-Modul (614), das so konfiguriert ist, dass es nach dem Empfangen einer Zugangsanforderung von einem Benutzer zu einer für dynamische Beschleunigung gewünschten Domäne:
für jeden von mehreren Rückkehr-zur-Quelle-Leitwegpfaden des CDN-Knotens einen jeweiligen Pfadwert des jeweiligen Rückkehr-zur-Quelle-Leitwegpfads bestimmt, und
einen der Rückkehr-zur-Quelle-Leitwegpfade basierend auf den Pfadwerten zum Durchführen einer Rückkehr-zur-Quelle-Operation auswählt, um Inhalt von einer Quellstation der Domäne zu erhalten;
wobei das Bestimmen des jeweiligen Pfadwerts eines jeweiligen der Rückkehr-zur-Quelle-Leitwegpfade umfasst:
Multiplizieren eines jeweiligen Erkundungswerts zwischen einem Zugangsknoten und einem Relaisknoten mit einem ersten Gewicht;
Multiplizieren eines jeweiligen Erkundungswerts zwischen zwei benachbarten Relaisknoten mit einem zweiten Gewicht; und
Multiplizieren eines jeweiligen Erkundungswerts zwischen einer Quellstation und einem Relaisknoten mit einem dritten Gewicht; und
Zusammenzählen entsprechender Werte, um den jeweiligen Pfadwert des jeweiligen der Rückkehr-zur-Quelle-Leitwegpfade zu erhalten.

11. Ein oder mehrere Speicher (604), die computerausführbare Anweisungen darauf speichern, die bei Ausführung durch einen oder mehrere Prozessoren (602) den einen oder die mehreren Prozessoren zum Durchführen von Handlungen veranlassen, die umfassen:
Empfangen von Konfigurationsinformationen durch einen Knoten eines Inhaltsausgabenetzwerks, CDN, von einer globalen Steuerzentrale;
Bestimmen eines Typs des CDN-Knotens aus mehreren Typen von CDN-Knoten basierend auf den Konfigurationsinformationen, wobei die mehreren Typen von CDN-Knoten einen Relaisknoten und einen Zugangsknoten umfassen;
Durchführen von Leitwegerkundung zwischen dem CDN-Knoten und einem oder mehreren CDN-Knoten durch den CDN-Knoten basierend auf dem Typ des CDN-Knotens, um einen oder mehrere jeweilige Erkundungswerte zu erhalten;
in Reaktion auf eine Bestimmung, dass der CDN-Knoten eine Zugangsanforderung von einem Benutzer zu einer für dynamische Beschleunigung gewünschten Domäne empfängt,
Bestimmen für jeden von mehreren Rückkehr-zur-Quelle-Leitwegpfaden des CDN-Knotens eines jeweiligen Pfadwerts des jeweiligen Rückkehr-zur-Quelle-Leitwegpfads; und
Auswählen eines der Rückkehr-zur-Quelle-Leitwegpfade basierend auf den Pfadwerten zum Durchführen einer Rückkehr-zur-Quelle-Operation, um Inhalt von einer Quellstation der Domäne zu erhalten;
wobei das Bestimmen des jeweiligen Pfadwerts eines jeweiligen der Rückkehr-zur-Quelle-Leitwegpfade umfasst:
Multiplizieren eines jeweiligen Erkundungswerts zwischen einem Zugangsknoten und einem Relaisknoten mit einem ersten Gewicht;
Multiplizieren eines jeweiligen Erkundungswerts zwischen zwei benachbarten Relaisknoten mit einem zweiten Gewicht; und
Multiplizieren eines jeweiligen Erkundungswerts zwischen einer Quellstation und einem Relaisknoten mit einem dritten Gewicht; und
Zusammenzählen entsprechender Werte, um den jeweiligen Pfadwert des jeweiligen der Rückkehr-zur-Quelle-Leitwegpfade zu erhalten.

## Revendications

1. Procédé comprenant :
la réception, par un nœud de réseau de distribution de contenu, CDN, d'informations de configuration d'un centre de commande global ;
la détermination d'un type du nœud de CDN à partir de multiples types de nœuds de CDN en fonction des informations de configuration, les différents types de nœuds de CDN comportant un nœud relais et un nœud d'accès ;
la réalisation, par le nœud de CDN, d'une exploration de route entre le nœud de CDN et un ou plusieurs autres nœuds de CDN en fonction du type du nœud de CDN pour obtenir une ou plusieurs valeurs d'exploration respectives ; et
en réponse à une détermination que le nœud de CDN reçoit à partir d'un utilisateur une demande d'accès à un domaine souhaité pour une accélération dynamique,
la détermination, pour chacun de multiples chemins de routage de retour à la source du nœud de CDN, d'une valeur de chemin respective du chemin de routage de retour à la source respectif ; et
la sélection d'un des chemins de routage de retour à la source en fonction des valeurs de chemin pour réaliser une opération de retour à la source afin d'obtenir un contenu à partir d'une station source du domaine ;
dans lequel la détermination de la valeur de chemin respective d'un chemin respectif des chemins de routage de retour à la source comporte :
la multiplication d'une valeur d'exploration respective entre un nœud d'accès et un nœud relais par un premier poids ;
la multiplication d'une valeur d'exploration respective entre deux nœuds relais adjacents par un deuxième poids ; et
la multiplication d'une valeur d'exploration respective entre une station source et un nœud relais par un troisième poids ; et
l'addition de valeurs correspondantes pour obtenir la valeur de chemin respective du chemin respectif des chemins de routage de retour à la source.

2. Procédé selon la revendication 1, dans lequel la réalisation, par le nœud de CDN, de l'exploration de route entre le nœud de CDN et un ou plusieurs autres nœuds de CDN en fonction du type du nœud de CDN pour obtenir les une ou plusieurs valeurs d'exploration respectives comporte :
la réalisation de l'exploration de route sur d'autres nœuds relais et une station source en fonction des informations de configuration pour obtenir les valeurs d'exploration respectives en réponse à la détermination que le nœud de CDN est un nœud relais ; ou
la réalisation de l'exploration de route sur d'autres nœuds relais en fonction des informations de configuration pour obtenir les valeurs d'exploration respectives si le nœud est un nœud d'accès.

3. Procédé selon n'importe quelle revendication précédente, dans lequel la valeur d'exploration respective obtenue en fonction de l'exploration de route sur le nœud relais en utilisant le nœud de CDN comme nœud d'accès est réglée à zéro en réponse à la détermination que le type du nœud de CDN comporte à la fois un nœud relais et un nœud d'accès.

4. Procédé selon n'importe quelle revendication précédente, dans lequel les informations de configuration comprennent :
des informations du domaine souhaité pour l'accélération dynamique ; et
un ou plusieurs identifiants respectifs d'un ou plusieurs groupes de nœuds d'accès réalisant l'accélération dynamique.

5. Procédé selon la revendication 4, dans lequel les informations d'un groupe de nœuds d'accès respectif des un ou plusieurs groupes de nœuds d'accès comportent :
un identifiant du groupe de nœuds d'accès respectif ;
une liste de nœuds d'accès ;
un ou plusieurs identifiants respectifs d'un ou de plusieurs groupes de nœuds relais réalisant l'accélération dynamique ;
des informations des un ou plusieurs groupes de nœuds relais ; et
un identifiant de la station source.

6. Procédé selon la revendication 5, dans lequel des informations d'un groupe de nœuds relais respectif des un ou plusieurs groupes de nœuds relais comportent un identifiant du groupe de nœuds relais respectif et une liste de nœuds relais respectifs.

7. Procédé selon la revendication 6, dans lequel la réception, par le nœud de CDN, des informations de configuration comporte la détermination d'un type du nœud de CDN en fonction des informations de configuration, la détermination du type du nœud de CDN en fonction des informations de configuration comportant :
la détermination d'un groupe de nœuds d'accès correspondant en fonction de l'identifiant respectif du groupe de nœuds d'accès respectif dans l'accélération dynamique ;
la détermination que le nœud figure dans la liste de nœuds d'accès dans les informations du groupe de nœuds d'accès respectif ; et
la détermination que le type du nœud est un nœud d'accès en réponse à la détermination que le nœud d'accès figure dans la liste de nœuds d'accès.

8. Procédé selon n'importe quelle revendication précédente, dans lequel la sélection du chemin de routage de retour à la source en fonction des valeurs de chemin pour réaliser l'opération de retour à la source comporte :
en réponse à la détermination qu'aucun chemin de routage de retour à la source n'est disponible, la sélection d'un chemin de routage de retour à la source ayant la plus petite valeur de chemin pour l'opération de retour à la source.

9. Procédé selon l'une quelconque des revendications 1 à 7, dans lequel la sélection de l'un des chemins de routage de retour à la source en fonction des valeurs de chemin pour réaliser l'opération de retour à la source comporte :
en réponse à la détermination qu'un chemin de routage de retour à la source est disponible, la détermination que le chemin de routage de retour à la source ayant la plus petite valeur de chemin est ou non le chemin de routage de retour à la source actuellement utilisé,
la réalisation d'une opération de retour à la source en utilisant le chemin de routage de retour à la source actuellement utilisé en réponse à la détermination que le chemin de routage de retour à la source ayant la plus petite valeur de chemin est le chemin de routage de retour à la source actuellement utilisé ; ou
la détermination qu'une différence entre deux chemins de routage de retour à la source est comprise en-deçà d'un seuil prédéterminé en réponse à la détermination que le chemin de routage de retour à la source ayant la plus petite valeur de chemin d'accès n'est pas le chemin de routage de retour à la source actuellement utilisé ;
la réalisation de l'opération de retour à la source en utilisant le chemin de routage de retour à la source qui est actuellement utilisé en réponse à la détermination que la différence est comprise en-deçà du seuil prédéterminé ; ou
la réalisation de l'opération de retour à la source en utilisant le chemin de routage de retour à la source ayant la plus petite valeur de chemin en réponse à la détermination que la différence n'est pas comprise en-deçà du seuil prédéterminé.

10. Dispositif (600) dans un nœud de réseau de distribution de contenu, CDN, comprenant :
un module de réception (610) configuré pour recevoir des informations de configuration à partir d'un centre de commande global (302) ;
un module de jugement configuré pour déterminer un type du nœud de CDN à partir de multiples types de nœuds de CDN en fonction des informations de configuration, les multiples types de nœuds de CDN comportant un nœud relais et un nœud d'accès ;
un module de détection (612) configuré pour réaliser une exploration de route entre le nœud de CDN et un ou plusieurs autres nœuds de CDN en fonction du type de nœud de CDN pour obtenir une ou plusieurs valeurs d'exploration respectives ; et
un module de retour à la source (614) configuré pour, après réception à partir d'un utilisateur d'une demande d'accès à un domaine souhaité pour une accélération dynamique :
déterminer, pour chacun de multiples chemins de routage de retour à la source du nœud de CDN, une valeur de chemin respective du chemin de routage de retour à la source respectif, et
sélectionner un des chemins de routage de retour à la source en fonction des valeurs de chemin pour réaliser une opération de retour à la source afin d'obtenir un contenu à partir d'une station source du domaine ;
dans lequel la détermination de la valeur de chemin respective d'un chemin respectif des chemins de routage de retour à la source comporte :
la multiplication d'une valeur d'exploration respective entre un nœud d'accès et un nœud relais par un premier poids ;
la multiplication d'une valeur d'exploration respective entre deux nœuds relais adjacents par un deuxième poids ; et
la multiplication d'une valeur d'exploration respective entre une station source et un nœud relais par un troisième poids ; et
l'addition de valeurs correspondantes pour obtenir la valeur de chemin respective de l'un des chemins de routage de retour à la source.

11. Une ou plusieurs mémoires (604) stockant des instructions lisibles par ordinateur qui, à leur exécution par un ou plusieurs processeurs (602), amènent les un ou plusieurs processeurs à réaliser des actions comprenant :
la réception, par un nœud de réseau de distribution de contenu, CDN, d'informations de configuration d'un centre de commande global ;
la détermination d'un type du nœud de CDN à partir de multiples types de nœuds de CDN en fonction des informations de configuration, les multiples types de nœuds de CDN comportant un nœud relais et un nœud d'accès ;
la réalisation, par le nœud de CDN, d'une exploration de route entre le nœud de CDN et un ou plusieurs autres nœuds de CDN en fonction du type du nœud de CDN pour obtenir une ou plusieurs valeurs d'exploration respectives ;
en réponse à une détermination que le nœud de CDN reçoit à partir d'un utilisateur une demande d'accès à un domaine souhaité pour une accélération dynamique,
la détermination, pour chacun de multiples chemins de routage de retour à la source du nœud de CDN, d'une valeur de chemin respective du chemin de routage de retour à la source respectif ; et
la sélection de l'un des chemins de routage de retour à la source en fonction des valeurs de chemin pour réaliser une opération de retour à la source afin d'obtenir un contenu à partir d'une station source du domaine ;
dans lequel la détermination de la valeur de chemin respective d'un chemin respectif des chemins de routage de retour à la source comporte :
la multiplication d'une valeur d'exploration respective entre un nœud d'accès et un nœud relais par un premier poids ;
la multiplication d'une valeur d'exploration respective entre deux nœuds relais adjacents par un deuxième poids ; et
la multiplication d'une valeur d'exploration respective entre une station source et un nœud relais par un troisième poids ; et
l'addition de valeurs correspondantes pour obtenir la valeur de chemin respective de l'un des chemins de routage de retour à la source.
